Europäisches Patentamt

European Patent Office

Office européen des brevets

(19)

(11) Veröffentlichungsnummer: **0 390 963**

**A2**

(12) **EUROPÄISCHE PATENTANMELDUNG**

(21) Anmeldenummer: **89111940.6**

(22) Anmeldetag: **30.06.89**

(51) Int. Cl.⁵: **G01L 1/14**

(30) Priorität: **16.03.89 DE 3908544**

(43) Veröffentlichungstag der Anmeldung:
**10.10.90 Patentblatt 90/41**

(84) Benannte Vertragsstaaten:
**DE FR GB IT SE**

(71) Anmelder: **VDO Adolf Schindling AG**
**Gräfstrasse 103**
**D-6000 Frankfurt/Main 90(DE)**

(72) Erfinder: **Weibler, Wolfgang, Dr.**
**Herzogenriedstrasse 46**
**D-6800 Mannheim 1(DE)**
Erfinder: **Porth, Wolfgang**
**Röhrborngasse 70**
**D-6000 Frankfurt/Main 60(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Lastsensor für ein Kraftfahrzeug.**

(57) Bei einem Lastsensor für ein Kraftfahrzeug ist der Boden eines Gehäuses im mittleren Bereich mit der zu messenden Last (Kraft) beaufschlagbar. In dem Gehäuse ist eine formstabile Scheibe vorgesehen, die im Randbereich des Bodens mit einem Abstandselement auf dem Boden aufliegt. Der von der Innenfläche des Bodens und der dem Boden zugewandten Oberfläche der formstabilen Scheibe gebildete Kondensator ist mit einer Schaltung zur Auswertung der Kapazität verbunden.

EP 0 390 963 A2

Die Erfindung betrifft einen Lastsensor für ein Kraftfahrzeug.

Bei einer bekannten Lageregelung eines Kraftfahrzeugs werden in Abhängigkeit von den jeweils auf das Fahrzeug wirkenden Kräften die Federung sowie die Dämpfung gesteuert. Dabei ist eine Messung der Last, nämlich derjenigen Kräfte, welche vom Fahrzeug auf die einzelnen Räder übertragen werden, erforderlich.

Aufgabe der vorliegenden Erfindung ist es, einen Lastsensor anzugeben, der hierfür geeignet ist, zuverlässig arbeitet und kostengünstig herstellbar ist. Ferner ist insbesondere am Kopfteil eines Federbeins eine geringe Bauhöhe erforderlich.

Der erfindungsgemäße Lastsensor ist dadurch gekennzeichnet, daß der Boden eines Gehäuses im mittleren Bereich mit der zu messenden Last (Kraft) beaufschlagbar ist, daß in dem Gehäuse eine formstabile Scheibe vorgesehen ist, die im Randbereich des Bodens mit einem Abstandselement auf dem Boden aufliegt, und daß der von der Innenfläche des Bodens und der dem Boden zugewandten Oberfläche der formstabilen Scheibe gebildete Kondensator mit einer Schaltung zur Auswertung der Kapazität verbindbar ist.

Der erfindungsgemäße Lastsensor weist eine geringe Bauhöhe auf und zeichnet sich durch äußerste Zuverlässigkeit selbst bei den rauhen Bedingungen des Kraftfahrzeugbetriebs aus. Letzteres wird unter anderem dadurch gewährleistet, daß keine bewegten Teile vorhanden sind.

Eine Weiterbildung der Erfindung besteht darin, daß das Gehäuse auf der dem Boden gegenüberliegenden Seite mit einem Deckel verschlossen ist und daß zwischen der formstabilen Scheibe und dem Deckel eine Feder, vorzugsweise eine Tellerfeder, angeordnet ist, welche die formstabile Scheibe in Richtung auf den Boden preßt.

Diese Weiterbildung ermöglicht einerseits eine einfache Montage, wobei durch eine geeignete Dichtung zwischen dem Deckel und dem Gehäuse, beispielsweise durch Verpressen, das eigentliche Sensorelement vor Umwelteinflüssen, beispielsweise Feuchtigkeit, geschützt ist.

Durch die in den Unteransprüchen aufgeführten Maßnahmen sind vorteilhafte Weiterbildungen und Verbesserungen der im Hauptanspruch angegebenen Erfindung möglich.

Insbesondere werden vorteilhafte Abstandselemente angegeben. Da der Abstand zwischen dem Boden und der formstabilen Scheibe im Sinne einer möglichst großen Kapazitätsänderung bei den geringen Formänderungen des Bodens möglichst gering sein soll, kommt dem Abstandselement bezüglich seiner Herstellbarkeit sowie seiner Formstabilität wesentliche Bedeutung zu. In den Unteransprüchen sind daher vorteilhafte Werkstoffe und Maßnahmen zur Herstellung des Abstandselements angegeben. Die einstückige Herstellung der formstabilen Scheibe mit dem Abstandselement kann beispielsweise durch Pressung erfolgen.

Gemäß einer anderen Weiterbildung der Erfindung ist vorgesehen, daß eine erste Scheibe das Kopfteil eines Federbeins abschließt, daß eine fahrzeugfeste zweite Scheibe das Gehäuse enthält, daß die erste und die zweite Scheibe mit Führungselementen verbunden sind, welche eine axiale Bewegung der Scheiben zueinander gestatten und daß ein vorzugsweise halbkugelförmiges Kraftaufnahmeelement am Boden des Gehäuses zur Aufnahme der vom Fahrzeug auf das Federbein wirkenden Kräfte vorgesehen ist.

Durch diese Weiterbildung wird eine geringe Bauhöhe des Lastsensors einschließlich derjenigen Teile, welche die zu messenden Kräfte in den Lastsensor einleiten, am Kopfteil des Federbeins erreicht.

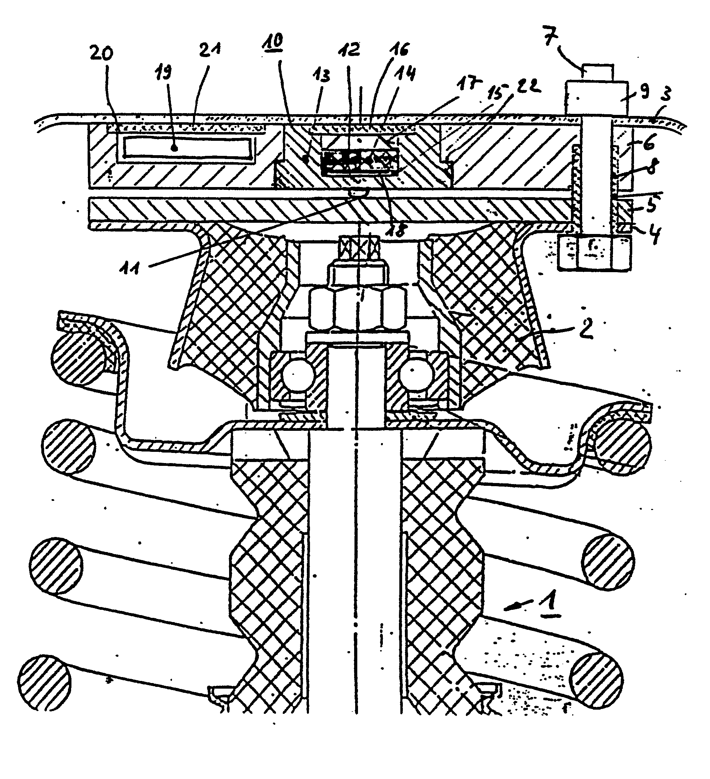

Die Erfindung läßt zahlreiche Ausführungsformen zu. Eine davon ist schematisch in der Zeichnung dargestellt und nachfolgend beschrieben.

In der Zeichnung ist von einem Federbein 1 lediglich der obere Teil dargestellt, bei dem in an sich bekannter Weise eine elastische Lagerung 2 vorgesehen ist, damit Pendelbewegungen, die beim Durchfedern auftreten, nicht auf das Karosserieteil 3 des Kraftfahrzeugs übertragen werden. Die elastische Lagerung weist einen Flansch 4 auf, auf welchen eine Scheibe 5 mit gleichem Durchmesser aufgelegt ist. Dieser steht eine weitere Scheibe 6 gegenüber, welche fest mit dem Karosserieteil 3 verbunden ist. Dazu sind mehrere am Umfang verteilte Schrauben 7 vorgesehen, von denen lediglich eine dargestellt ist. Die Schrauben 7 sind jeweils mit einer Hülse 8 versehen, die in eine entsprechend erweiterte Bohrung der Scheibe 6 eindringt. Durch das Spannen der Schrauben mit Hilfe der Muttern 9 wird somit die Scheibe 6 fest mit dem Karosserieteil 3 verbunden. Die Schrauben 7 sowie die Hülsen 8 bilden jedoch für den Flansch 4 und die Scheibe 5 eine Führung, auf der sie sich in axialer Richtung bewegen können.

Über die Scheibe 5 wird die der jeweiligen Belastung des Rades entsprechende Kraft zum Lastsensor 10 geleitet, wozu ein halbkugelförmiges Kraftaufnahmelement 11 an dem Boden 12 des Lastsensors 10 angeordnet ist. Die Kraft wird über das Gehäuse 13 des Lastsensors und die Scheibe 6 in das Karosserieteil 3 eingeleitet. Innerhalb des Gehäuses 13 ist eine formstabile Scheibe 14 angeordnet, welche über einen ringförmigen Abstandshalter 15 auf dem Boden 12 des Gehäuses 13 aufliegt. Ein Deckel 16 schließt den Innenraum des Gehäuses 13 ab. Zur ausreichenden Dichtung sind geeignete Maßnahmen, beispielsweise ein Verpressen des Deckels durch eine entsprechende Verformung des oberen Randes des Gehäuses 13 vorgesehen. Zwischen dem Deckel 16 und der formstabilen Scheibe 14 ist eine Tellerfeder 17 vorgesehen, welche die formstabile Scheibe 14 in Richtung auf den Boden 12 drückt.

Die formstabile Scheibe 14 besteht ebenso wie das Abstandselement 15 aus einem nichtleitenden Werkstoff und trägt auf der unteren Seite eine leitende Schicht 18, welche zusammen mit dem Boden 12 einen Kondensator bildet. Über eine nicht dargestellte Anschlußleitung ist dieser Kondensator mit einer Schaltung 19 verbunden, welche in an sich bekannter Weise die jeweilige Kapazität des Kondensators auswertet, also ein von der Kapazität abhängiges Signal abgibt. Die Schaltung 19 befindet sich in einer Aussparung 20 der Scheibe 6 und ist ebenfalls mit Hilfe eines Deckels 21 vor Umwelteinflüssen geschützt. Eine der Last entsprechende Kapazitätsänderung erfolgt dadurch, daß der Boden 12 sich in Abhängigkeit von der jeweiligen Last durchbiegt, und somit der Abstand zwischen den Kondensatorplatten geändert wird.

Das Gehäuse 13 besteht vorzugsweise aus Stahl und ist mit einem umlaufenden Absatz 22 versehen, um die auf den Boden 12 des Gehäuses wirkenden Kräfte zur Scheibe 6 weiterzuleiten. Als Werkstoff für die formstabile Scheibe 14 eignet sich beispielsweise Glas oder Keramik. Das Abstandselement 15 kann aus dem gleichen Werkstoff oder aus einem anderen isolierenden und ebenfalls formstabilen Werkstoff hergestellt werden. Zur möglichst einfachen Montage des Lastsensors wird das Abstandselement 15 bereits vor der Montage mit der formstabilen Scheibe 14 verbunden. Die Stärke des Abstandselements 15 beträgt Bruchteile eines Millimeters, damit die durch die Durchbiegung des Bodens 12 bedingte Kapazitätsänderung möglichst groß ist. Eine vorteilhafte Ausführungsform des Abstandselements 15 besteht aus in einem geeigneten Kleber eingebetteten Glaskugeln, die mit Hilfe eines geeigneten Druckverfahrens, beispielsweise Siebdruck, auf die formstabile Scheibe 14 aufgebracht werden. Eine andere Möglichkeit zur Herstellung des Abstandselements 15 besteht darin, dieses einstückig mit der formstabilen Scheibe 14, beispielsweise durch Pressung, herzustellen.

**Ansprüche**

1. Lastsensor für ein Kraftfahrzeug, dadurch gekennzeichnet, daß der Boden (12) eines Gehäuses (13) im mittleren Bereich mit der zu messenden Last (Kraft) beaufschlagbar ist, daß in dem Gehäuse (13) eine formstabile Scheibe (14) vorgesehen ist, die im Randbereich des Bodens (12) mit einem Abstandselement (15) auf dem Boden (12) aufliegt, und daß der von der Innenfläche des Bodens (12) und der dem Boden zugewandten Oberfläche der formstabilen Scheibe (14) gebildete Kondensator mit einer Schaltung (19) zur Auswertung der Kapazität verbindbar ist.

2. Lastsensor nach Anspruch 1, dadurch gekennzeichnet, daß das Gehäuse (13) auf der dem Boden (12) gegenüberliegenden Seite mit einem Deckel (16) verschlossen ist und daß zwischen der formstabilen Scheibe (14) und dem Deckel (16) eine Feder (17), vorzugsweise eine Tellerfeder, angeordnet ist, welche die formstabile Scheibe (14) in Richtung auf den Boden (12) preßt.

3. Lastsensor nach einem der Ansprüche 1 oder 2, dadurch gekennzeichnet, daß im mittleren Bereich des Bodens (12) außen ein vorzugsweise halbkugelförmiger Kraftaufnehmer (11) vorgesehen ist.

4. Lastsensor nach einem der vorhergehenden Ansprüche, dadurch gekennzeichnet, daß die formstabile Scheibe (14) aus einem nichtleitenden Werkstoff besteht und an der dem Boden (12) zugewandten Oberfläche mit einer leitfähigen Schicht (18) versehen ist.

5. Lastsensor nach Anspruch 4, dadurch gekennzeichnet, daß die formstabile Scheibe (14) aus Glas oder Keramik besteht.

6. Lastsensor nach einem der Ansprüche 4 oder 5, dadurch gekennzeichnet, daß das Abstandselement (15) von einem Ring aus nichtleitendem Werkstoff gebildet ist.

7. Lastsensor nach einem der Ansprüche 4 oder 5, dadurch gekennzeichnet, daß das Abstandselement (15) aus einem mit Glasperlen geeigneter Größe gefüllten Kleber besteht, der vorzugsweise mittels Siebdruck aufgebracht ist.

8. Lastsensor nach einem der Ansprüche 4 oder 5, dadurch gekennzeichnet, daß das Abstandselement (15) einstückig mit der formstabilen Scheibe (14) ist.

9. Lastsensor nach einem der vorhergehenden Ansprüche, dadurch gekennzeichnet, daß eine erste Scheibe (5) das Kopfteil eines Federbeins (1) abschließt, daß eine fahrzeugfeste zweite Scheibe (6) das Gehäuse (13) enthält, daß die erste und die zweite Scheibe mit Führungselementen (7, 8) verbunden sind, welche eine axiale Bewegung der Scheiben (5, 6) zueinander gestatten, und daß ein vorzugsweise halbkugelförmiges Kraftaufnahmeelement (11) am Boden (12) des Gehäuses (13) zur Aufnahme der vom Fahrzeug auf das Federbein (1) wirkenden Kräfte vorgesehen ist.

10. Lastsensor nach Anspruch 9, dadurch gekennzeichnet, daß die Schaltung (19) zur Auswertung der Kapazität in der zweiten Scheibe (6) angeordnet ist.